# EUROPEAN PATENT SPECIFICATION

(11) **EP 0 537 839 B1**
(45) Date of publication and mention of the grant of the patent: **11.06.1997**
(21) Application number: 92203076.2
(22) Date of filing: 06.10.1992
(51) Int. Cl.: A47C 7/46

(54) **A support member for seats useful, for example, as a lumbar support member in the backrests of automobile vehicle seats**
Stützglied für Sitze, verwendbar zum Beispiel als Lendenstütze in Rückenlehnen von Autositzen
Elément de support pour sièges utilisable par exemple comme support lombaire dans les dossiers des sièges automobiles

(30) Priority: 18.10.1991 IT PD910095 U
(43) Date of publication of application: 21.04.1993
(73) Proprietor: CLERPREM S.p.A., I-36010 Carre' (Vicenza) (IT)
(72) Inventor: Carussi, Gianpaolo, I-36010 Carre' (Vicenza) (IT)
(74) Representative: Cantaluppi, Stefano

(56) References cited:
- EP-A- 0 420 824
- US-A- 4 556 254

## Description

This invention relates to supporting members for seats. It has been developed with special consideration to its possible application as a lumbar support member, namely as support member that, in a seat backrest environment, provides constraining support for the lumber part of the back of an occupant of the seat.

Such lumbar support members are proposed to be used, for instance, in the automobile vehicle industry.

In any case, this invention may be used to advantage with other seats as well, e.g. with interior seating arrangements, etc..

In addition, this invention may also be applied as a supporting member to the seat plate (or cushion) of a seat; accordingly, the useful range of this invention should be regarded as in no way limited in its application to just backrests.

EP-A-0 420 824 discloses a lumbar support member for the backrests of seats which is sand-glass or butterfly-like in shape. The lumbar support member described in said patent is practically comprised of a band-like body of generally arcuate configuration, with its concave facing forward relatively to the seat, including two mirror-image symmetrical plates interconnected at their mutually facing ends so as to enable a general swinging movement about the generally vertical connection (hinge) axis. The two plates are held to the side posts of the seat backrest by wire-like or spring members. The arrangement disclosed allows the vertical profile of the support member to be adjusted, in an automatic or controlled fashion, to suit the anthropometric features and/or the habits or preferences of a person occupying the seat.

This invention is directed to provide an improvement on such an approach in terms of enhanced effectiveness and comfort in application and use.

In accordance with this invention, this object is achieved by a support or holder member having the characteristics specifically set forth in the appended claim 1. Various modifications of the support member of the independent claim are defined in the dependent claims 1 to 12.

The invention will be now described, by way of non-limitative example, with reference to the accompanying drawing, wherein:
Figure 1 is a general, front elevation view of a support member according to the invention;
Figure 2 is a sectional view taken along a line II-II in Figure 1; and
Figure 3 is a sectional view taken along a line III-III in Figure 1.

Generally shown at 1 in the drawings is a support member intended for use in a seat, for example, as a lumbar support member in the backrest of an automobile vehicle seat. For a comprehensive description of the usability of such a member and the way it is installed within a seat, reference is made to EP-A-0 420 824 mentioned in the introductory part of this specification.

The member 1 basically comprises two plate-like bodies 2 molded from a plastics material and having generally symmetrical features about the center-plane of the member 1. The inward ends, facing each other, of the two bodies 2 are interconnected bridge-fashion by a flexible intermediate body 3 being a generally band- or strip-like construction.

According to the invention, the bodies 2 and the bridging body 3 are integral parts of a single plastics molding, e.g. high-density polyethylene, molding. In this way, the member 1 is a unitary plastics molding.

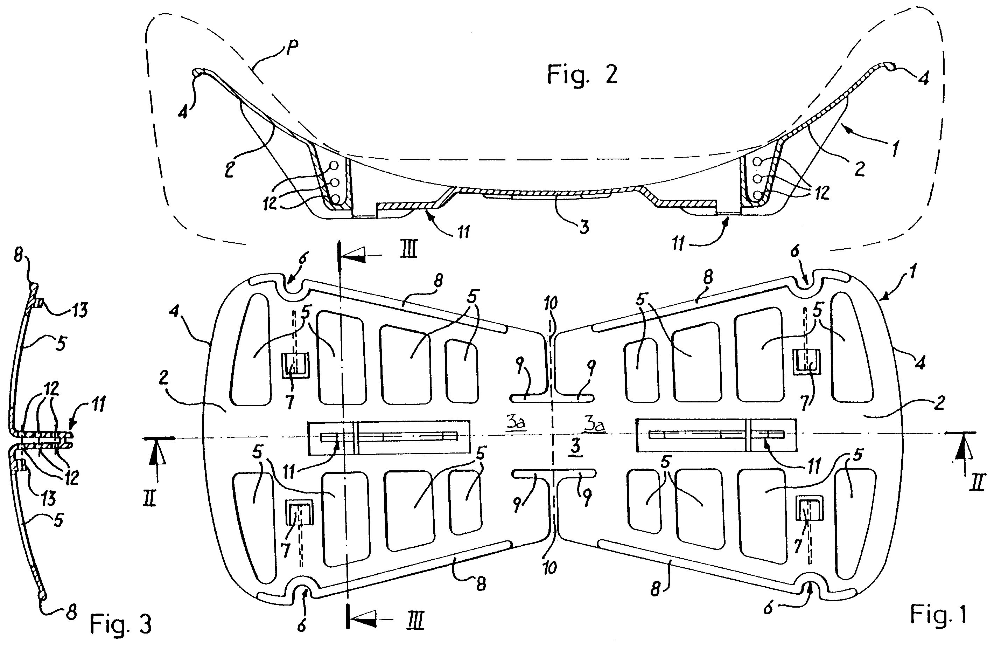

This approach proves specially advantageous where the aim is to provide, with a general co-molding operation, for integral construction on the member 1 of a cushion consisting, for example, of a piece of polyurethane foam P (whose profile is illustrated by a dash outline in Figure 2).

If examined in detail, it may be seen that each body 2 consists basically of an arcuate plate having a height dimension that increases toward the outward edge 4 of the body gradually from a minimum value at the inward end facing the other body 2. The edge 4 would usually be an arcuate pattern with the convex extending outwards from the member 1.

Both bodies 2 are provided with apertures 5 which, additionally to affording a lighter support member 1, promote a good grip for the cushion P, optionally co-molded, and ensure general permeability of the member 1 to ventilating flows within the seat.

Provided at locations close to the outward edges 4, on the opposite upper and lower edges of each body 2, are two notches 6 forming passageways or anchor means for (usually metallic) ties used for securing the seat covering on the seat structure. The ends of such ties, which may be elastic in nature, can be attached to hook formations 7 projecting from the rearward surface of parts 2.

It is understood that the terms upper, lower, forward, rearward, etc. as used herein, and where applicable in the appended claims as well, refer to the normal fitting of the member 1 within a seat, and in the instance of an automobile vehicle seat, to the normal travel direction of the vehicle equipped with the seat.

As a rule, the two bodies 2 are desired to have some structural rigidity. To this purpose, ridges or ribs would be provided to perform a generally stiffening function. Substantially for the same purpose, but also to facilitate the member positioning inside the seat structure, the bodies 2 are both provided peripherally with a marginal edge 8 having a generally rounded shape.

The intermediate body 3 may be viewed ideally as penetrating, with its opposite ends 3a, corresponding notches in the facing ends of the two bodies 2 so as to form, within the bodies 2 themselves, two slots or cutouts 9.

Stated otherwise, at the intermediate body 3 within the support member 1, there may be identified two additional notches or depressions 10 separating the bodies 2 and defining, within the support member 1, a central portion having reduced height virtually equal to the height of the strip or band that comprises the intermediate body 3.

The combined slots or cutouts 9 and 10 eventually define, at the central portion of the support member 1, two opposed and preferably symmetrical recesses having a generally T-shaped profile. This configuration, along with the choice of the flexible material comprising the intermediate body 3, is directed to impart generally flexible features to the support member 1. Such features result in the following, within the support member 1 as a whole:
ability to provide a general parliament hinge design between the two bodies 2 about an ideally vertical axis (when applied to a backrest), and consequent ability to selectively alter the profile (in practice, the amount of concave) of member 1; and
ability to subject member 1 to a generally torsional movement by rotating one of the bodies 2 about an axis approximately coincident with section line II-II in Figure 1; this deformation feature has proved specially advantageous in terms of convenience of installation and use for the ultimate user, since it ensures full adaptation of the support member 1 to the back (and more generally, the body) of the seat occupant even when the latter takes, for a reason whatever, a position with the back (or thighs) out of alignment or aslant with respect to the vertical center-plane of the backrest or the general seating plane of the seat cushion.

Shown at 11 are two bracket formations which extend outwards from the rearward surface of the bodies 2. These bracket formations have preferably one or more holes 12 adapted to provide hitch or anchor formations for elements (such as springs or hooks, not shown) useful to enable the support member 1 to be mounted and supported on the seat frame.

Of preference, such bracket formations would be made hollow, as best shown in the sectional view of Figure 3, into a generally tray-like configuration with a free mouth portion open to the forward surface of the bodies 2.

Advantageously, on the rearward surface of one or both of the bodies 2, there may be provided (either as integral lugs thereof, or as attachments thereto, e.g. by a melt-on process) hitch formations 13, for example, fork-like with springy prongs for securing on the member 1 such accessory items as cables, sleeves of flexible cable controls, etc..

## Claims

1. A support member (1) for seats having a sand-glass or butterfly-like overall shape, comprising:
- two plate-type side bodies (2) defining the overall pattern of the support member (1) with mutually facing inward ends; and
- a generally flexible, interconnecting intermediate body (3) extending bridge-fashion between said inward ends of said side bodies, to permit a book-like relative orientation of said side bodies (2) about an ideal hinge axis, characterized in that said intermediate body (3) is an integral piece with said side bodies (2), thereby said member (1) being a one-piece construction, and in that said intermediate body (3) is shaped so that each side body (2) assumes a specific orientation relative to the other of the side bodies (2) when the support member (1) is subjected to a general torsional movement.

2. A support member according to any of the preceding claims, characterized in that it comprises apertures (5) provided in at least said side bodies (2) for the purpose of rendering the support member (1) lighter.

3. A support member according to any of the preceding claims, characterized in that said intermediate body has a band- or strip-like overall configuration whereby a central portion of minimum height can be identified in the member (1) as a whole.

4. A support member according to any of the preceding claims, characterized in that said side bodies (2) are formed with apertures, preferably in the form of notches (6), for passing tie means therethrough adapted to secure the covering of said seat.

5. A support member according to Claim 4, characterized in that said side bodies (2) have hitch formations (7) for said tie means.

6. A support member according to any of the preceding claims, characterized in that it has a cushion (P) associated therewith by co-molding.

7. A support member according to any of the preceding claims, characterized in that said side bodies (2) have respective outward edges (8) of a generally rounded pattern.

8. A support member according to any of the preceding claims, characterized in that said bodies (2) have stiffening ribs.

9. A support member according to any of the preceding claims, characterized in that said intermediate and side bodies (2, 3) are formed from a plastics material such as high-density polyethylene.

10. A support member according to any of the preceding claims, characterized in that said intermediate body (3) fits between said mutually facing, inward ends of said side bodies, (2) defining respective cutouts (9) in its sides.

11. A support member according to Claim 10, characterized in that it comprises further parting cutouts between said side bodies (2), said cutouts (9) and said further cutouts (10) jointly defining, at the central portion of the support member (1), recesses generally with a T-shaped profile.

12. A support member according to any of the preceding claims, characterized in that hitch formations (13) are provided for securing on the support member (1) such accessory items as cables, sleeves, and the like.

## Patentansprüche

1. Stützglied (1) für Sitze, die eine sanduhr- oder schmetterlingsähnliche Gesamtform haben, umfassend:
- zwei plattenartige Seitenkörper (2), die die Gesamtform des Stützglieds definieren, mit gegenüberliegenden, innenliegenden Enden; und
- einem im allgemeinen flexiblen, verbindenden Zwischenkörper (3), der sich brückenartig zwischen den innenliegenden Enden der Seitenkörper erstreckt, um eine bücherartige Anordnung der Seitenkörper (2) um eine gedachte Gelenkachse herum zu erreichen,
**dadurch gekennzeichnet,**
dass der Zwischenkörper (3) integral mit den Seitenkörpern (2) ist, so dass das Stützglied (1) ein einstückiges Gebilde ist und dass der Zwischenkörper (3) derart geformt ist, dass jeder Seitenkörper (2) eine bestimmte Anordnung relativ zu dem anderen Seitenköper (2) einnimmt, wenn das Stützglied (1) einer allgemeinen Torsionsbewegung unterworfen ist.

2. Stützglied nach Anspruch 1, dadurch gekennzeichnet, dass es Öffnungen (5) aufweist, die wenigstens in den Seitenkörpern (2) vorgesehen sind, um das Stützglied leichter zu machen.

3. Stützglied nach einem der vorhergehenden Ansprüche, dadurch gekennzeichnet, dass der Zwischenkörper eine band- oder streifenartige Gesamtform hat, wobei ein Mittelteil geringster Höhe in dem Stützglied (1) als Ganzes identifiziert werden kann.

4. Stützglied nach einem der vorhergehendne Ansprüche, dadurch gekennzeichnet, dass die Seitenkörper (2) mit Öffnungen, vorzugsweise mit Kerbenform (6), geformt sind, damit Festbindemittel, die zum Befestigen der Abdeckung des Sitzes geeignet sind, hindurchführbar sind.

5. Stützglied nach Anspruch 4, dadurch gekennzeichnet, dass die Seitenkörper (2) Hakengebilde (7) für die Festbindemittel haben.

6. Stützglied nach einem der vorhergehenden Ansprüche, dadurch gekennzeichnet, dass es ein Kissen (P) hat, das durch gleichzeitiges Formen mit dem Stützglied verbunden ist.

7. Stützglied nach einem der vorhergehenden Ansprüche, dadurch gekennzeichnet, dass die Seitenkörper (2) jeweils Aussenkanten (8) mit im allgemeinen runder Form haben.

8. Stützglied nach einem der vorhergehenden Ansprüche, dadurch gekennzeichnet, dass die Seitenkörper (2) Stabilisierungsrippen haben.

9. Stützglied nach einem der vorhergehenden Ansprüche, dadurch gekennzeichnet, dass die Zwischen- und Seitenkörper (2, 3) aus einem Plastikmaterial, wie Polyäthylen hoher Dichte (high-density polyethylene), geformt sind.

10. Stützglied nach einem der vorhergehenden Ansprüche, dadurch gekennzeichnet, dass der Zwischenkörper (3) zwischen den gegenüberliegenden, innenliegenden Enden der Seitenkörper (2), die jeweils Ausschnitte (9) in ihren Seiten definieren, passt.

11. Stützglied nach Anspruch 10, dadurch gekennzeichnet, dass es weiter teilende Ausschnitte zwischen den Seitenkörpern (2) aufweist, wobei die Ausschnitte (9) und die weiteren Ausschnitte (10) gemeinsam im Mittelbereich des Stützgliedes (1) Vertiefungen mit im allgemeinen einem T-förmigen Profil definieren.

12. Stützglied nach einem der vorhergehenden Ansprüche, dadurch gekennzeichnet, dass Hakengebilde (13) vorgesehen sind, um an dem Stützgliedzubehör, wie Kabel, Boxen u.dgl., festzulegen.

## Revendications

1. Elément de soutien (1) pour sièges, possédant une forme générale de sablier ou de papillon, comprenant :
- deux corps latéraux (2) en forme de plaque qui définissent la configuration générale de l'élément de soutien (1) et présentent des extrémités intérieures dirigées l'une vers l'autre; et
- un corps intermédiaire de liaison (3) sensiblement flexible, qui s'étend en pont entre les extrémités intérieures desdits corps latéraux, pour permettre auxdits corps latéraux (2) de s'orienter l'un par rapport à l'autre à la façon des pages d'un livre autour d'un axe de charnière fictif, caractérisé en ce que ledit corps intermédiaire (3) est une pièce d'un seul tenant avec lesdits corps latéraux (2), ledit élément (1) étant de cette façon une construction d'une seule pièce, et en ce que ledit corps intermédiaire (3) est conformé de telle manière que chacun desdits corps latéraux (2) prenne une orientation particulière par rapport a l'autre desdits corps latéraux (2) lorsque l'élément de soutien (1) subit un mouvement général de torsion.

2. Elément de soutien selon une quelconque des revendications précédentes, caractérisé en ce qu'il comprend des ouvertures (5) prévues dans au moins lesdits corps latéraux (2) pour rendre l'élément de soutien (1) plus léger.

3. Elément de soutien selon une quelconque des revendications précédentes, caractérisé en ce que ledit corps intermédiaire présente la configuration générale d'une bande ou d'une barre, de sorte qu'on peut observer dans l'élément (1) considéré dans son ensemble une partie centrale d'une hauteur minimale.

4. Elément de soutien selon une quelconque des revendications précédentes, caractérisé en ce que lesdits corps latéraux (2) sont munis d'ouvertures, de préférence sous la forme d'encoches (6), dans lesquelles on peut passer des moyens d'attache adaptés pour fixer le garnissage dudit siège.

5. Elément de soutien selon la revendication 4, caractérisé en ce que lesdits corps latéraux (2) présentent des formations d'accrochage (7) pour recevoir lesdits moyens d'attache.

6. Elément de soutien selon une quelconque des revendications précédentes, caractérisé en ce qu'il possède un coussin (P) qui y est fixé par co-moulage.

7. Elément de soutien selon une quelconque des revendications précédentes, caractérisé an ce que lesdits corps latéraux (2) présentent des bords extérieurs respectifs (8) d'une configuration générale arrondie.

8. Elément de soutien selon une quelconque des revendications précédentes, caractérisé an ce que lesdits corps (2) présentent des nervures raidisseuses.

9. Elément de soutien salon une quelconque des revendications précédentes, caractérisé en ce que ledit corps intermédiaire et lesdits corps latéraux (2, 3) sont formés en une matière plastique telle que le polyéthylène a haute densité.

10. Elément de soutien selon une quelconque des revendications précédentes, caractérisé an ce que ledit corps intermédiaire (3) se place entre lesdites extrémités intérieures, dirigées l'une vers l'autre, desdits corps latéraux (2) an définissant des découpes respectives (9) dans ses cotés.

11. Elément de soutien selon la revendication 10, caractérisé en ce qu'il comprend en outre des découpes de séparation entre lesdits corps latéraux (2), lesdites découpes (9) et lesdites autres découpes (10) définissant ensemble, dans la partie centrale de l'élément de soutien (1), des évidements ayant sensiblement un profil an T.

12. Elément de soutien selon une quelconque des revendications précédentes, caractérisé en ce que des formations d'accrochage (13) sont prévues pour fixer à l'élément de soutien (1) des accessoires tels que des câbles, gaines et analogues.
